Europäisches Patentamt

European Patent Office

Office européen des brevets

(11) Veröffentlichungsnummer: **0 156 444**
**B1**

(12) # EUROPÄISCHE PATENTSCHRIFT

(45) Veröffentlichungstag der Patentschrift:
20.09.89

(51) Int. Cl.⁴: **C 09 K  5/06**

(21) Anmeldenummer: 85200465.4

(22) Anmeldetag: 26.03.85

(54) **Latentwärmespeichermittel, Verfahren zur Herstellung eines Keimbildners und Latentwärmespeicher.**

(30) Priorität: 28.03.84 DE 3411399

(43) Veröffentlichungstag der Anmeldung:
02.10.85 Patentblatt 85/40

(45) Bekanntmachung des Hinweises auf die Patenterteilung: 20.09.89 Patentblatt 89/38

(84) Benannte Vertragsstaaten:
DE FR GB IT

(56) Entgegenhaltungen:
DE—A— 2 448 739
GB—A— 1 255 331
PATENTS ABSTRACTS OF JAPAN, vol. 5, no. 54 (C-50) [726], 15. April 1981; & JP - A - 56 8484

(73) Patentinhaber: Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
FR GB IT

(72) Erfinder: Schröder, Johann, Dr.
Adenauerallee 125a
D-5100 Aachen (DE)
Erfinder: Piel-Nicklich, Vera
Feldstrasse 12
D-5010 Bergheim (DE)

(74) Vertreter: Piegler, Harald, Dipl.-Chem. et al
Philips Patentverwaltung GmbH Wendenstrasse 35
Postfach 10 51 49
D-2000 Hamburg 1 (DE)

EP 0 156 444 B1

## Beschreibung

Die Erfindung betrifft ein Latentwärmespeichermittel auf der Basis von Natriumacetat-Trihydrat und einem Keimbildner. Ferner betrifft die Erfindung ein Verfahren zur Herstellung eines solchen Keimbildners und einen Latentwärmespeicher, der ein Latentwärmespeichermittel auf der Basis von Natriumacetat-Trihydrat und einen solchen Keimbildner enthält.

Natriumacetat-Trihydrat, $NaOOCCH_3 \times 3H_2O$, ist als Material zur Speicherung von Wärme besonders gut geeignet. Es besitzt sowohl eine hohe Schmelzwärme von 243,8 kJ/dm³ als auch große Wärmekapazitäten von 4,58 kJ/dm³K in der flüssigen Phase und 2,79 kJ/dm³K im festen Zustand. Der Schmelzpunkt von 58 °C ist außerdem für viele technische Anwendungen sehr günstig.

Ein entscheidender Nachteil des Natriumacetat-Trihydrats für seine praktische Verwendbarkeit ist aber seine starke Neigung zur Unterkühlung, so daß eine Kristallisation anstatt am Schmelzpunkt erst bei wesentlich tieferen Temperaturen von etwa 15 bis — 15° erfolgt. Während die spontane Kristallisation für stöchiometrisches $NaOOCCH_3 \times 3 H_2O$ erst unter 10 °C signifikant wird, tritt bei verdünnteren Lösungen (z. B. mit 5 Gew.% Wasserzusatz) eine spontane Kristallisation erst bei noch tieferer Temperatur (z. B. ± 0 °C) auf.

Aus Chem. Abstr. 97 (1982) 58634d und der JP-OS 57-74 380 ist es bekannt, ein Mittel zur Verhinderung der Unterkühlung, d. h. einen Keimbildner, herzustellen, indem man eine Mischung von $Na_4P_2O_7 \times 10H_2O$ mit $NaOOCCH_3 \times 3H_2O$ auf 75°C erhitzt. Beim Abkühlen entsteht ein Formkörper, der aus zwei Schichten besteht. Die Pyrophosphat-Schicht wird abgetrennt, während der restliche, aus $Na_4P_2O_7 \times 10H_2O$ + $NaOOCCH_3 \times 3H_2O$ bestehende Körper, gegebenenfalls in Stücke zerschnitten, als Keimbildner für $NaOOCCH_3 \times 3H_2O$ verwendet wird. Dieses Verfahren hat den Nachteil, daß die Abtrennung des Keimbildners in der festen Phase im Produktionsprozeß nur schwierig durchzuführen ist und darum zu schwankenden und schlecht reproduzierbaren Ergebnissen führt. Außerdem wird der so hergestellte Keimbildner beim Erwärmen über eine Temperatur von 88 °C unwirksam.

Aus Chem. Abstr. 76 (1972) 74176c und der GB-PS 12 55 331 ist eine andere Gattung von Wärmespeichermitteln bekannt, nämlich dotierte kristalline Stoffe, bei denen polymorphe Phasenumwandlungen auftreten. Die Wärmespeicherung basiert auf der Umwandlungsenthalpie. Die Dotierung verhindert die Unterkühlung. Geeignete Dotierkristalle sind epitaktisch und/oder isomorph und/oder isotypisch mit der Niedertemperaturform der Wirtskristalle. Als Beispiel wird erwähnt, daß $Na_2MoO_4$, das eine orthorhombische Niedertemperaturform hat, mit $Na_2WO_4$ in einem Verhältnis von $10^7 : 1$ dotiert wird. Eine Lehre für Latentwärmespeichermittel auf der Basis von Natriumacetat-Trihydrat geben diese Druckschriften allein schon deshalb nicht, weil der beim letztgenannten Speichermittel auftretende Phasenübergang fest-flüssig keine polymorphe Phasenumwandlung ist.

Aufgabe der Erfindung ist es, einen Keimbildner für ein Latentwärmespeichermittel auf der Basis von Natriumacetat-Trihydrat zu schaffen, der eine sichere und vom ersten Speicherzyklus an fehlerfreie Keimbildung des Natriumacetat-Trihydrats am Schmelzpunkt oder nur wenige Grade (< 10 °C) unter dem Schmelzpunkt bewirkt.

Diese Aufgabe wird erfindungsgemäß dadurch gelöst, daß das Latentwärmespeichermittel als Keimbildner das Fällungsprodukt von Natriumwolframat-Dihydrat aus einer Schmelze von Natriumacetat-Trihydrat enthält.

Zur Herstellung des erfindungsgemäßen Fällungsproduktes wird eine Mischung von 20 bis 25 Gew.% $NaWO_4 \times 2H_2O$ mit 80 bis 75 Gew.% $NaOOCCH_3 \times 3H_2O$ auf 70 bis 80 °C erhitzt. Die hierbei entstehende Aufschlämmung von festem Wolframat in geschmolzenem Acetat wird nun soweit unterkühlt, bis bei Temperaturen von — 20° bis — 40 °C eine spontane Kristallisation der Schmelze erfolgt. Nun wird die Mischung wieder auf 70 bis 80 °C erhitzt und die Natriumacetatschmelze heiß vom Bodenkörper abdekantiert und abfiltriert. Der Filterrückstand wird dann mit Äthanol gewaschen und an der Luft getrocknet.

Das so gewonnene Produkt, dessen genaue Zusammensetzung und Struktur noch ungeklärt ist, wirkt, in Mengen von 0,4 bis 3 Gew.% zu Natriumacetat-Trihydrat zugesetzt, als sicherer Keimbildner, der vom ersten Speicherzyklus an die Kristallisation am Schmelzpunkt oder nur wenige Grade (< 10 °C) darunter auslöst.

Die zur zuverlässigen Kristallisation benötigte Menge an Keimbildner beträgt nur 0,4 Gew.%, auf stöchiometrisches Natriumacetat-Trihydrat bezogen. Abweichungen von bis zu 5 Gew.% von der stöchiometrischen Zusammensetzung haben auf die Keimbildung keinen wesentlichen Einfluß.

Für die sichere Keimbildung gibt es allerdings eine Einschränkung: Das Speichermittel darf in seiner Gänze nie über eine Temperatur von 83 °C hinaus erhitzt werden, da dadurch der durch die Vorbehandlung erreichte Keimbildnereffekt verloren geht.

Nun wird in den meisten Anwendungsfällen die Betriebstemperatur kaum so hoch über den Schmelzpunkt von 58 °C angehoben werden, daß die kälteste Stelle des gesamten Speichers heißer als 83 °C wird. Sollte dies jedoch in speziellen Fällen nicht sicher ausgeschlossen werden können, so kann durch einfache konstruktive Maßnahmen dafür gesorgt werden, daß wenigstens ein kleiner Teil des Speichermittels, in dem sich fester Keimbildner befindet und der mit dem gesamten restlichen Speichermittel in direkter Verbindung steht, nicht über 83 °C hinaus erhitzt wird.

Die Erfindung und die zuvor erwähnten konstruktiven Maßnahmen, die in Verbindung mit dem Keimbildner ebenfalls Gegenstand der Erfindung sind, werden im folgenden anhand einer Zeichnung und eines Ausführungsbeispiels näher erläutert. In der Zeichnung zeigen

Fig. 1 einen Speicherbehälter mit einem Kühlrohr und

Fig. 2 einen Speicherbehälter mit einem Wärmeleitrohr.

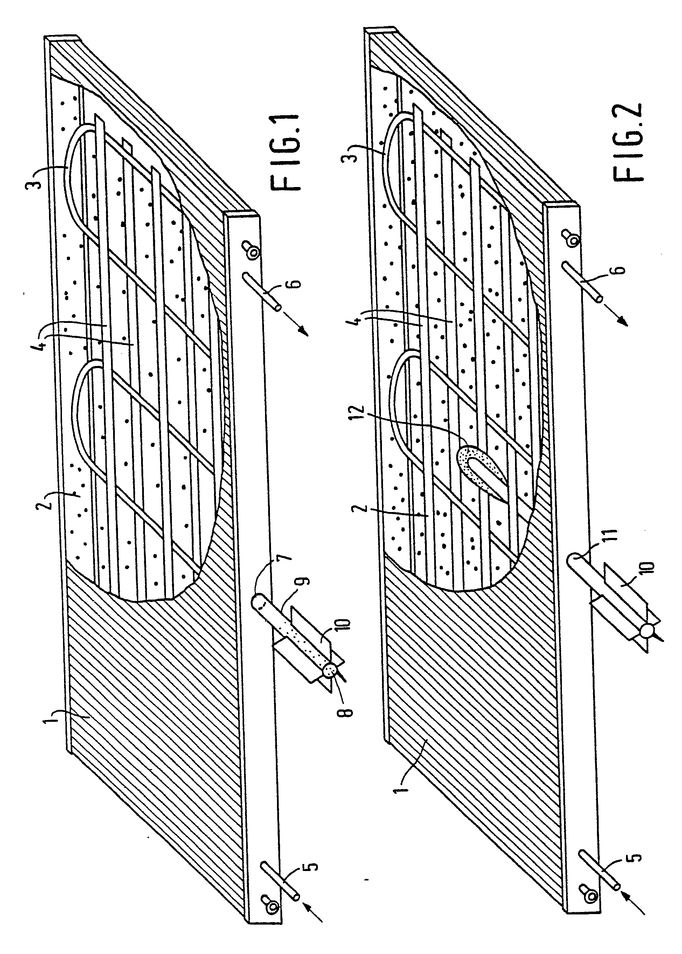

Die Fig. 1 und 2 zeigen je einen Speicherbehälter mit einer gewellten Stahlwand 1, der mit Natriumacetat-Trihydrat und Keimbildner als Speichermittel 2 (durch Punkte angedeutet) gefüllt ist. Das Speichermittel umgibt einen Wärmeaustauscher 3, der mit Halterungen 4, einem Einlaß 5 und einem Auslaß 6 versehen ist.

Im einfachsten Falle kann durch eine (nicht dargestellte) örtlich schlechtere Wärmezufuhr (Isolation) gegenüber der Wärmequelle und/oder eine örtlich bessere Wärmeableitung (Kühlfläche) zur kälteren Umgebung dafür gesorgt werden, daß ein kleiner Teil des Speicherbehälters, z. B. eine Ecke am Boden desselben, bei allen möglichen Betriebsbedingungen nie über 83 °C heiß wird.

Noch wirkungsvoller und meist auch einfacher kann dies erreicht werden, indem man, wie in Fig. 1 dargestellt, einen mit dem Speichermittel 2 über eine Öffung 7 in direkter Verbindung stehenden und mit Speichermittel 8 und festem Keimbildner gefüllten Gefäßteil 9 (z. B. in Form eines Rohres oder eines Rohrbogens, Kühlfinger) aus dem Speicherbehälter in die kühlere Umgebung ragen läßt. Der Gefäßteil 9 ist gegebenenfalls mit Kühlblechen 10 versehen.

Umgekehrt kann auch, wie in Fig. 2 dargestellt, ein guter Wärmeleiter 11 (z. B. ein Kupfer- oder Aluminiumstab oder auch ein Wärmeleitrohr), der mit der kühleren Umgebung in leitender Verbindung steht, derart in den Speicherbehälter ragen, daß ein kleiner Teil 12 des Speichermittels, in dem sich fester, gealterter Keimbildner befindet, in keiner Betriebsphase über 83 °C heiß werden kann. Auch der Wärmeleiter 11 ist gegebenenfalls mit Kühlblechen 10 versehen.

Beispiel

Zur Herstellung von Keimbildner werden 25 g Natriumwolframat-Dihydrat, $NaWO_4 \times 2H_2O$, mit 75 g Natriumacetat-Trihydrat, $NaOOCCH_3 \times 3H_2O$, gemischt und auf 75 °C erhitzt. Dabei entsteht eine Suspension von festem Wolframat in geschmolzenem Acetat. Die Suspension wird in einer Gefriervorrichtung solange abgekühlt, bis bei etwa — 25 °C eine spontane Kristallisation erfolgt. Das Gemisch wird nun wieder auf 75 °C erhitzt, wobei eine Sedimentation erfolgt. Die flüssige Phase wird dekantiert und filtriert, um festen Niederschlag abzutrennen. Um die Temperatur des Gemisches oberhalb des Schmelzpunktes von Natriumacetat-Trihydrat zu halten, wird die Filtration in einem entsprechend erwärmten Trichter (Heißwassertrichter) durchgeführt. Der Filterrückstand wird dann mit Äthanol gewaschen und an der Luft getrocknet.

Der so erhaltene Keimbildner wird in einer Menge von 1 Gew.% zu Natriumacetat-Trihydrat hinzugefügt. In wiederholten Speicherzyklen, d. h. bei zahlreichen Kristalliervorgängen, zeigt das so hergestellte Latentwärmespeichermittel eine zuverlässige Keimbildung bei Temperaturen zwischen 50 und 59 °C.

## Patentansprüche

1. Latentwärmespeichermittel auf der Basis von Natriumacetat-Trihydrat und einem Keimbildner, dadurch gekennzeichnet, daß es als Keimbildner das Fällungsprodukt von Natriumwolframat-Dihydrat aus einer Schmelze von Natriumacetat-Trihydrat enthält.

2. Latentwärmespeichermittel nach Anspruch 1, dadurch gekennzeichnet, daß es den Keimbildner in einer Menge von 0,4 bis 3 Gew.%, bezogen auf stöchiometrisches Natriumacetat-Trihydrat, enthält.

3. Verfahren zur Herstellung des Keimbildners für das Latentwärmespeichermittel nach Anspruch 1, dadurch gekennzeichnet, daß eine Mischung von 20 bis 25 Gew.% Natriumwolframat-Dihydrat mit 80 bis 75 Gew.% Natriumacetat-Trihydrat auf 70 bis 80 °C erhitzt wird, die hierbei entstehende Aufschlämmung von festem Wolframat in geschmolzenem Acetat soweit unterkühlt wird, bis bei Temperaturen von — 20 bis — 40 °C eine spontane Kristallisation der Schmelze erfolgt, die Mischung wieder auf 70 bis 80 °C erhitzt wird, die Natriumacetatschmelze heiß vom Bodenkörper abdekantiert und abfiltriert wird und der Filterrückstand mit Äthanol gewaschen und an der Luft getrocknet wird.

4. Latentwärmespeicher mit einem Latentwärmespeichermittel und einem Keimbildner nach Anspruch 1 oder 2, gekennzeichnet durch eine örtlich schlechtere Wärmezufuhr gegenüber der Wärmequelle und/oder eine örtlich bessere Wärmeableitung zur kälteren Umgebung, die derart ausgebildet sind, daß ein kleiner Teil des Speichers bei allen möglichen Betriebsbedingungen nie über 83 °C heiß wird.

5. Latentwärmespeicher mit einem Latentwärmespeichermittel und einem Keimbildner nach Anspruch 1 oder 2, dadurch gekennzeichnet, daß ein mit dem Speichermittel in direkter Verbindung stehender und mit Speichermittel und festem Keimbildner gefüller Gefäßteil aus dem Speicherbehälter in die kühlere Umgebung ragt.

6. Latentwärmespeicher mit einem Latentwärmespeichermittel und einem Keimbildner nach Anspruch 1 oder 2, dadurch gekennzeichnet, daß ein guter Wärmeleiter, der mit der kühleren Umgebung in leitender Verbindung steht, derart in den Speicherbehälter ragt, daß ein kleiner Teil des Speichermittels, in dem sich fester, gealterter Keimbildner befindet, in keiner Betriebsphase über 83 °C heiß werden kann.

## Claims

1. A latent heat storage medium based on sodium acetatetrihydrate and a nucleating agent, characterized in that it comprises the precipitation product of sodium tungstate-dihydrate from a melt of sodium acetate-trihydrate as a nucleating agent.

2. A latent heat storage medium as claimed in Claim I, characterized in that it comprises the nucleating agent in a quantity of 0.4 to 3 % by weight calculated on the stoichiometric sodium acetatetrihydrate.

3. A method of manufacturing the nucleating agent for the latent heat storage medium as claimed in Claim 1, characterized in that a mixture of 20 to 25 % by weight of sodium tungstate-dihydrate with 80 to 75 % by weight of sodium acetate-trihydrate is heated at 70 to 80 °C the resulting suspension of solid tungstate in melted acetate is supercooled to such an extent that at temperature of — 20 to — 40 °C a spontaneous crystallization of the melt occurs, the mixture is heated again at 70 to 80 °C, the sodium acetate melt is decanted and filtered off from the solid phase while hot and the filter residue is washed with ethanol and dried in air.

4. A latent heat storage device with a latent heat storage medium and a nucleating agent as claimed in Claim 1 or 2, characterized by a locally diminished heat supply with respect to the heat source and/or locally better heat dissipation to the colder atmosphere, which are formed so that a small part of the storage device, in all possible operating conditions never becomes hotter than 83 °C.

5. A latent heat storage device with a latent heat storage medium and a nucleating agent as claimed in Claim 1 or 2, characterized in that a part of the container which is in direct contact with the storage medium and is filled with storage medium and solid nucleating agent projects from the storage container into the colder atmosphere.

6. A latent heat storage device, with a latent heat storage medium and a nucleating agent as claimed in Claim 1 or 2, characterized in that a suitable heat conductor which is in conductive connection with the cooler atmosphere projects into the storage container in such manner that a small part of the storage medium in which solid, aged nucleating agent is present can in no operating phase become hotter than 83 °C.

## Revendications

1. Moyen accumulateur de chaleur latente à base de trihydrate d'acétate de sodium et d'un agent de nucléation, caractérisé en ce que comme agent de nucléation, le moyen accumulateur de chaleur latente contient le produit de précipitation de dihydrate de tungstate de sodium d'un bain de trihydrate d'acétate de sodium.

2. Moyen accumulateur de chaleur latente selon la revendication 1, caractérisé en ce qu'il contient l'agent de nucléation dans une quantité de 0,4 à 3 % en poids, rapporte au trihydrate d'acétate de sodium stœchiométrique.

3. Procédé pour la préparation de l'agent de nucléation pour le moyen accumulateur de chaleur latente selon la revendication 1, caractérisé en ce qu'on chauffe un mélange de 20 à 25 % en poids de dihydrate de tungstate de sodium avec 80 à 75 % en poids de trihydrate d'acétate de sodium à 70 à 80 °C, la suspension de tungstate solide qui se produit dans l'acétate fondu est surfondue jusqu'à ce qu'il se produise une cristallisation spontanée du bain à des températures comprises entre — 20 °C à — 40 °C. Puis, le mélange est chauffé à 70 à 80 °C et le bain d'acétate de sodium est séparé à l'état chaud du corps déposé par décantation et filtration et le résidu de filtrage est lavé à l'eau et séché à l'air.

4. Accumulateur de chaleur latente muni d'un moyen accumulateur de chaleur latente et d'un agent de nucléation selon la revendication 1 ou 2, caractérisé par une amenée de chaleur localement plus mauvaise par rapport à la source de chaleur et/ou une conduction de chaleur localement meilleure par rapport à l'ambiance plus froide, qui sont réalisées de façon qu'une petite partie de l'accumulateur ne devienne jamais plus chaude que 83 °C dans toutes les conditions de fonctionnement possibles.

5. Accumulateur de chaleur latente muni d'un moyen accumulateur de chaleur latente et d'un agent de nucléation selon la revendication 1 ou 2, caractérisé en ce qu'une partie de récipient communiquant de façon directe avec le moyen accumulateur et remplie de moyen accumulateur et de l'agent de nucléation solide dépasse du récipient de moyen accumulateur et s'étend dans l'ambiance plus froide.

6. Accumulateur de chaleur latente muni d'un moyen accumulateur de chaleur latente et d'un agent de nucléation selon la revendication 1 ou 2, caractérisé en ce qu'un bon conducteur de chaleur, qui communique de façon conductrice avec l'ambiance plus froide, s'étend dans le récipient de moyen accumulateur de façon qu'une petite partie du moyen accumulateur qui se trouve dans de l'agent de nucléation solide vieilli ne puisse être plus chaude que 83 °C en aucune phase de fonctionnement.

FIG.1

FIG.2

EP 0 156 444 B1